# EUROPÄISCHE PATENTSCHRIFT

(11) **EP 2 647 579 B1**
(45) Veröffentlichungstag und Bekanntmachung des Hinweises auf die Patenterteilung: **10.01.2018**
(21) Anmeldenummer: 13157790.0
(22) Anmeldetag: 05.03.2013
(51) Int. Cl.: B65D 1/00, G06K 7/00, G06K 19/00, G09F 3/00, G06Q 10/08, B05B 7/22, B05B 12/08

(54) **Verfahren zum Kennzeichnen eines Behälters für Pulver und Vorrichtung zum Verwenden von Pulver aus dem Behälter**
Method for marking a container for powder and device for using powder from the container
Procédé de caractérisation d'un récipient pour poudre et dispositif d'utilisation de poudre provenant du récipient

(30) Priorität: 03.04.2012 DE 102012102885
(43) Veröffentlichungstag der Anmeldung: 09.10.2013
(73) Patentinhaber: Maschinenfabrik Reinhausen GmbH, 93059 Regensburg (DE)
(72) Erfinder: Nettesheim, Stefan, 12205 Berlin (DE); Demirci, Arif, 93105 Tegernheim (DE)
(74) Vertreter: Reichert & Lindner Partnerschaft Patentanwälte

(56) Entgegenhaltungen:
- EP-A1- 2 282 184
- WO-A1-2005/002992
- DE-A1-102004 061 633
- JP-A- 2012 001 303

## Beschreibung

Die Erfindung betrifft ein Verfahren zum Kennzeichen eines Behälters für Pulver zur Beschichtung eines Substrates mit einem Plasmastrahl. Das Pulver dient gemäß einer möglichen Ausführungsform zur Beschichtung eines Substrats in einer Vorrichtung zum Beschichten.

Ferner betrifft die Erfindung eine Vorrichtung zum Verwenden von Pulver zur Beschichtung eines Substrates mit einem Plasmastrahl. In der dargestellten Ausführungsform ist eine Vorrichtung zum Beschichten eines Substrats beschrieben. Bei einer Vorrichtung ist ein Behälter vorgesehen, der das zum Beschichten verwendete Pulver enthält. Ferner ist in dem Behälter ein Ansaugmittel angeordnet, das zum Ansaugen des Pulvers von einer Oberfläche des Pulvers aus dem Behälter dient. Ebenso ist das Ansaugmittel für den Transport des Pulvers vom Behälter zum Substrat verantwortlich. Der Behälter steht während der Entnahme des Pulvers aus dem Behälter auf einer Waage.

Die Behälter für das Pulver kommen beispielsweise zur Zuführung dosierter Mengen von feinkörnigem Pulver für Plasmabeschichtungsprozesse bzw. Plasmabeschichtungsanlagen zum Einsatz. Es gilt dabei Pulveragglomerationen und Ablagerungen zu vermeiden, da andernfalls die Förderung des Pulvers zum Erliegen kommen kann.

Die internationale Anmeldung WO 2012/139840 A1 offenbart eine Vorrichtung und ein Verfahren zum Fördern von Pulver. Ein Behälter ist für das Pulver vorgesehen, wobei das Pulver im Behälter eine Oberfläche definiert. Ein Ansaugmittel hat eine Ansaugöffnung zum Ansaugen des Pulvers von der Oberfläche ausgebildet. Ein Bewegungsmittel dient zur Erzeugung einer Relativbewegung zwischen der Ansaugöffnung und der Oberfläche des Pulvers. Während der Relativbewegung erfolgt das Ansaugen des Pulvers, wobei eine Geschwindigkeit der Relativbewegung derart veränderlich ist, dass ein konstanter Massenstrom des Pulvers vom Behälter zum Substrat vorherrscht.

Die deutsche Offenlegungsschrift DE 10 2010 014 552 A1 offenbart ein Verfahren zur Plasmabeschichtung einer Substratoberfläche mit Beschichtungsflüssigkeit. Ein Plasmastrahl eines Niedertemperaturplasmas wird auf eine Substratoberfläche gerichtet. Die Beschichtungsflüssigkeit besteht aus einer Trägerflüssigkeit und einem feinkörnigen Pulver. Die Beschichtungsflüssigkeit wird in einem Homogenisierungsbehälter homogenisiert und mittels eines Pump- und Dosiersystems zu dem Plasma geleitet.

Die europäische Patentanmeldung EP 2 282 184 A1 offenbart einen Behälter zur Überwachung eines Füllstandes von einem Entnahmegut aus dem Behälter. Der Behälter ist für die Aufbewahrung von Pulver geeignet. Im Behälter ist mindestens ein RFID-Chip, z. B. am Boden des Behälters, angebracht. Ein optischer Sensor in Verbindung mit dem RFID-Chip werden zur Bestimmung des Füllstandes verwendet Die Möglichkeit der Materialcharakterisierung mit dem RFID-Chip ist nicht offenbart.

Die US Patentanmeldung US 2006/0132351 A1 offenbart einen Behälter zur Überwachung eines Füllstandes von pulverförmigem Material, in dem mindestens ein RFID-Chip angebracht ist. Unterschiedliche Behälter können durch einen Parametersatz mit Identifikationsnummern, den der RFID-Chip trägt, unterschieden werden. Parametersätze zur Materialcharakterisierung, zumindest bezüglich der Materialidentifikation und -qualität sind beschrieben, sind aber nicht auf dem RFID-Chip abgelegt, sondern werden durch Messung zusammen mit dem RFID-Chip ermittelt. Ein Schlüssel, der eine Freischaltung zur Verwendung des Behälters ermöglicht, ist nicht offenbart.

Die internationale Patentanmeldung WO 2005/002992 A1 offenbart einen Behälter, der für die Aufbewahrung von Pulver geeignet und mit mindestens einem RFID-Chip versehen ist. Der RFID-Chip ist bereits vom Hersteller mit einem Parametersatz zur Identifikation des Behälters und/oder dessen Inhalts versehen. Hinzu kommt, dass der RFID-Chip in einer separaten Tasche außen am Behälter angebracht ist. Ein Schlüssel, der eine Freischaltung zur Verwendung des Behälters ermöglicht, ist nicht offenbart.

In der deutschen Patentanmeldung DE 10 2007 013 093 A1 ist eine Vorrichtung zum Verwenden von Pulver mit einem Behälter zur Aufbewahrung von Pulver offenbart.

Eine Anordnung eines RFID-Chips, der einen Parametersatz zur Materialcharakterisierung trägt, ist nicht erwähnt. Auch die japanische Patentanmeldung JP 2001-130 offenbart nicht die Anordnung eines RFID-Chips im Behälter. Es ist lediglich der Absaugung des Pulvers aus dem Behälter offenbart.

Das Ansaugen des Pulvers erfolgt ausschließlich von der Oberfläche des im Behälter enthaltenen Pulvers. Um einen konstanten Massenstrom des Pulvers vom Behälter zur Oberfläche des Substrats zu gewährleisten, ist es unbedingt erforderlich, dass bestimmte Qualitätskriterien des Pulvers eingehalten werden. Die Qualitätskriterien des Pulvers sind nicht nur für den Transport des Pulvers vom Behälter zum Substrat verantwortlich, sondern beeinflussen auch die Qualität der auf eine Oberfläche des Substrats aufgebrachten Beschichtung. Der Transport des Pulvers und die Qualität der Beschichtung hängen von der Masse, der Größe der Pulverpartikel und evtl. Verunreinigung des Gebindes ab.

DE 10 2004 061633 A1 offenbart einen Behälter zum Transport und zur Aufbewahrung von Substanzen, der mit einem Transponder zur Radiofrequenzidentifikation versehen ist. Der Transponder umfasst einen elektronischen Speicher (Chip) und als Koppelelement eine Antennenspule, wobei die Antennenspule in oder auf einer Wandfläche außerhalb des Behälters angeordnet ist.

JP 2012 001303 A offenbart eine Vorrichtung zum Verwenden von Pulver, mit einem Behälter für das Pulver, einem Ansaugmittel zum Ansaugen des Pulvers von einer Oberfläche des Pulvers aus dem Behälter und zum Transport des Pulvers zu dessen Verwendung.

EP 2 282 184 A1 offenbart ein Verfahren und eine Vorrichtung zur Überwachung des Füllstandes von einem Entnahmegut, insbesondere Schütt-oder Stückgut, in einem Aufbewahrungsbehälter.

Eine Aufgabe der Erfindung ist, ein Verfahren zum Kennzeichnen eines Behälters für Pulver zu schaffen, so dass für den Betreiber einer Vorrichtung zum Verwenden des Pulvers sicher ist, dass das verwendete Pulver bestimmte Qualitätskriterien bzw. Parameter erfüllt, welche für eine qualitativ ausreichend gute Verarbeitung des Pulvers mit der Vorrichtung zum Verwenden von Pulver erforderlich sind.

Die obige Aufgabe wird durch ein Verfahren gelöst, das die Merkmale des Anspruchs 1 umfasst.

Eine weitere Aufgabe der Erfindung ist, eine Vorrichtung zum Verwenden von Pulver zu schaffen, wobei sichergestellt ist, dass das für die Vorrichtung verwendete Pulver bestimmte Qualitätskriterien bzw. Parameter erfüllt. Hinzu kommt, dass mit der Vorrichtung die Einstellung der Vorrichtung zum Verwenden des Pulvers erleichtert und vereinfacht wird.

Die obige Aufgabe wird durch eine Vorrichtung zum Verwenden von Pulver gelöst, die die Merkmale des Anspruchs 6 umfasst.

Es ist ein Behälter für Pulver offenbart. Obwohl sich die nachfolgende Beschreibung auf einen Behälter für Pulver zum Beschichten eines Substrats bezieht, soll dies nicht als Beschränkung der Beschreibung aufgefasst werden. Der Behälter kann bei allgemeinen Dosieranlagen, Wägeanlagen, Abfüllanlagen, Mischanlagen etc. Anwendung finden. Im Behälter ist mindestens ein RFID-Chip vorgesehen, der zumindest einen Parametersatz zur Materialcharakterisierung des Pulvers im Behälter abgelegt hat. Jedem Pulvertyp ist ein extra Schlüssel zugeordnet, mittels dem Daten des im Behälter befindlichen RFID-Chips über eine außerhalb des Behälters befindliche Antenne lesbar, beschreibbar und aktualisierbar sind. Mittels der über einen autorisierten Schlüssel freigeschalteten Parameter des im Behälter befindlichen Pulvers ist eine Möglichkeit der zusätzlichen Qualitätssicherung geschaffen. So kann ein Verwender des Pulvers sicher sein, dass er qualitativ zertifiziertes Pulver verwendet. Hinzu kommt, dass für den Hersteller von Anlagen zur Verwendung des Pulvers sichergestellt ist, dass auf den Anlagen nur zertifiziertes Pulver verwendet werden kann. Sollte es zu einem Störfall kommen, kann der Hersteller der Anlage auf einfache Weise überprüfen, ob auf der Anlage nicht autorisiertes Pulver verwendet worden ist. Die Pulverdaten bzw. Parameter werden z.B. in einem Speicher der Anlage abgelegt.

Der RFID-Chip funktioniert auch, wenn er am Boden des Behälters von metallischem oder leitfähigem Pulver überdeckt ist oder in metallisches oder leitfähiges Pulver eingebettet ist.

Wie bereits erwähnt, ist die Nutzung eines entsprechend ausgerüsteten Behälters im Beschichtungsbereich eine Möglichkeit der Anwendung. Bei einer Beschichtungsanlage kann es sich zum Beispiel um eine Anlage zum Beschichten mit einem Plasma handeln. Dies soll jedoch nicht als Beschränkung der Erfindung aufgefasst werden.

Der RFID-Chip kann am Boden des Behälters angebracht sein. Ferner kann der RFID-Chip an einer Wand des Behälters angebracht sein. Ebenso ist es denkbar, dass mehrere RFID-Chips gleich verteilt im Pulver innerhalb des Behälters angeordnet sind. Dies bedeutet, dass die RFID-Chips frei im Pulver schwimmen. Das Pulver kann ein elektrisch leitfähiges Pulver sein.

Das erfindungsgemäße Verfahren dient zum Kennzeichnen eines Behälters für Pulver. Das Pulver kann in einer Vorrichtung zum Verwenden des Pulvers herangezogen werden. Eine Möglichkeit der Verwendung ist die Beschichtung eines Substrats in einer Vorrichtung zum Beschichten. Obwohl sich die nachfolgende Beschreibung auf Verfahren zum Beschichten eines Substrats beschränkt, soll dies nicht als Beschränkung des erfindungsgemäßen Verfahrens aufgefasst werden. Bei dem Verfahren zum Kennzeichnen eines Behälters wird mindestens ein RFID-Chip jedem Behälter zugeordnet. Nachdem dies geschehen ist, kann das Pulver in den Behälter gefüllt werden. Für den Fall, dass mehrere RFID-Chips gleich verteilt im Pulver angeordnet sein sollen, werden die RFID-Chips zusammen mit dem Pulver gemischt und in den Behälter eingefüllt. Nachdem das Pulver und der RFID-Chip sich im Behälter befinden, wird von einem Hersteller für die Vorrichtung zum Verwenden bzw. zum Beschichten eines Substrats ein Schlüssel abgerufen bzw. angefordert. Die Schlüssel können z.B. in einer zentralen Datenbank verwaltet werden. Die Daten des im Behälter befindlichen mindestens einen RFID-Chips werden mittels des Schlüssels mit einem individuellen Parametersatz über eine außerhalb des Behälters befindliche Antenne gelesen, beschrieben und abgerufen. Die Antenne kann z.B. den Behälter umschließen. Dabei kann die Antenne sowohl als Sender und Empfänger ausgebildet sein.

Ebenso ist es möglich, dass während des Prozesses des Beschichtens eines Substrats mit dem Pulver während des Entleerens des Pulvers aus dem Behälter der individuelle Parametersatz gelesen, beschrieben und aktualisiert wird. Der Parametersatz kann dabei Einstellungswerte der Vorrichtung zum Beschichten umfassen, die auf dem RFID-Chip gespeichert werden. Diese Einstellungswerte der Vorrichtung zum Beschichten können für weitere Folgearbeitsschritte der Vorrichtung verwendet werden. Der Parametersatz umfasst ebenfalls Chargen- und Herstellernachweise des Pulvers. Der Parametersatz umfasst ferner die Füllmenge des Pulvers im Behälter, was für die erneute Verwendung des Behälters in einem späteren Arbeitsschritt die Einstellung der Vorrichtung erheblich erleichtert. Eine weitere Möglichkeit eines Parametersatzes ist die Materialcharakterisierung des Pulvers im Behälter. Wobei die Materialcharakterisierung z. B. die Verteilung der Partikelgröße des Pulvers, dessen elektrische Eigenschaften, das Herstellungsdatum, etc. umfasst. Ebenso kann der Parametersatz eine Restmenge des Pulvers im Behälter darstellen. Die Restmenge des Pulvers im Behälter bildet sich während des Entleervorgangs in der Vorrichtung zum Beschichten und wird für weitere Verarbeitungsschritte auf dem RFID-Chip beschrieben.

Ebenso kann der Parametersatz eine Position bzw. die Lage eines Ansaugmittels in Bezug auf eine Oberfläche des Pulvers im Behälter umfassen, so dass bei einer erneuten Inbetriebnahme der Vorrichtung zum Beschichten in einem teilentleerten Behälter das Ansaugmittel mittels einer Verstelleinrichtung in einem definierten Abstand zur Oberfläche bzw. in eine definierte Eintauchtiefe in die Oberfläche des Pulvers verfahren werden kann.

Die Beschreibung der Vorrichtung bezieht sich ebenfalls auf eine Vorrichtung zum Beschichten eines Substrats. Es ist für einen Fachmann selbstverständlich, dass die Vorrichtung bei allen Behältern für Pulver angewendet werden kann, bei denen das Pulver aus einem Behälter für beliebige Anwendungen verwendet wird. Die nachfolgende Beschreibung soll keine Beschränkung der Erfindung darstellen. Der Vorrichtung zum Beschichten eines Substrats ist ein Behälter für das zum Beschichten verwendete Pulver zugeordnet. Ferner besitzt die Vorrichtung ein Ansaugmittel zum Ansaugen des Pulvers von der Oberfläche des Pulvers aus dem Behälter. Das Ansaugmittel dient ebenfalls zum Transport des Pulvers vom Behälter zu einem Substrat. Bei der Entnahme des Pulvers aus dem Behälter mittels des Ansaugmittels steht der Behälter auf einer Waage. Der Behälter selbst ist mit einem RFID-Chip versehen und außerhalb des Behälters ist mindestens eine Antenne vorgesehen, die zum Lesen von Daten des mindestens einen RFID-Chips und/oder Schreiben von Daten auf den mindestens einen RFID-Chip vorgesehen ist. Ebenso ist es mittels der durch den Schlüssel autorisierten Daten des RFID-Chips möglich die Vorrichtung zu sperren, falls sich in der Vorrichtung ein Behälter mit Pulver befindet, das nicht durch einen Schlüssel freigegeben ist oder dem Behälter für das Pulver kein RFID-Chip zugeordnet ist.

Die Antenne selbst kann in der Waage integriert sein. Die Antenne kann auch lediglich der Waage zugeordnet sein, damit der RFID-Chip von der Antenne erfasst werden kann.

Die Vorrichtung umfasst ein Verstellelement, so dass das Ansaugmittel aufgrund der auf dem RFID-Chip vorhandenen Daten derart in Bezug auf die Oberfläche des im Behälter vorhandenen Pulvers positioniert werden kann, dass eine für die Beschichtung des Substrats erforderliche Menge an Pulver pro Zeiteinheit automatisch einstellbar ist.

Das Ansaugen des Pulvers mittels des Ansaugmittels in der Deckschicht erfolgt vorzugsweise möglichst nah an der Oberfläche des Pulvers. Diese oberflächennahe Ansaugung stellt auch bei feinkörnigen Pulvern mit Partikelgrößen von 0,01 bis 100 µm stets sicher, dass ein ausreichender Transport des Pulvers vom Behälter zum Substrat gewährleistet ist. Wie bereits erwähnt, kommen als Bewegungsmittel zur Erzeugung der Relativbewegung Dreiachssysteme in Frage. Mit diesem Bewegungsmittel kann eine Bewegung des Ansaugmittels in X-, Y- und Z-Richtung erzeugt werden. Mit dem Dreiachssystem ist es somit möglich, eine Verstellung des Ansaugmittels in Z-Richtung zu bewirken, die aufgrund der auf dem RFID-Chip vorhandenen Daten definiert wird. Somit kann mittels der auf dem RFID-Chip vorhandenen Daten eine genaue Einstellung des Ansaugmittels in Bezug auf das im Behälter vorhanden Pulver erzielt werden.

Mit dieser Verstellung in der Z-Richtung kann somit eine konstante Eintauchtiefe des Ansaugmittels in der Oberfläche des Pulvers gewährleistet werden. Ebenso ist es möglich, eine entsprechende Nachführung bzw. Positionierung der Ansaugöffnung des Ansaugmittels zu erzielen, wenn ein bereits verwendeter Behälter wieder in die Vorrichtung zum Beschichten eingesetzt wird, um ein weiteres Substrat mit dem gleichen Material bzw. Pulver zu beschichten.

Nachfolgend wird die Erfindung anhand der Figuren näher erläutert. Es zeigen:
- **Figur 1**: eine Vorrichtung zum Versenden von Pulver, wobei die hier dargestellte Vorrichtung zum Beschichten eines Substrats mit Pulver verwendet wird und das feinkörnige Pulver von einem Behälter zum Substrat gefördert wird;
- **Figur 2**: eine Ausführungsform des Behälters der Erfindung, wobei der RFID-Chip am Boden des Behälters angebracht ist;
- **Figur 3**: eine weitere Ausführungsform des Behälters, wobei der RFID-Chip an einer Wand des Behälters angebracht ist;
- **Figur 4**: eine weitere Ausführungsform des Behälters, wobei mehrere RFID-Chips gleich verteilt im Pulver angeordnet sind;
- **Figur 5**: eine schematische Darstellung eines Teils der Vorrichtung zum Verwenden von Pulver, wobei hier die Vorrichtung eine Vorrichtung zum Beschichten ist und der Behälter auf einer Waage steht, der eine Antenne zugeordnet bzw. in der eine Antenne integriert ist; und
- **Figur 6**: eine schematische Darstellung eines Blockdiagramms des erfindungsgemäßen Verfahrens, bei dem einem RFID-Chip die entsprechenden Daten zugewiesen werden, um das Pulver, welches sich im Behälter befindet, zu charakterisieren.

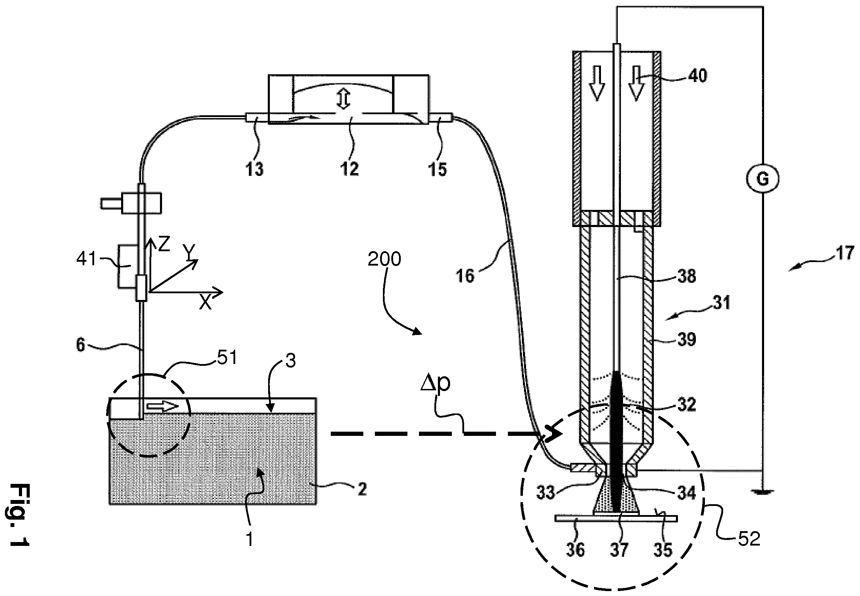

**Figur 1** zeigt eine Vorrichtung 200 zum Beschichten feinkörniger, nicht fließfähiger Pulver 1 mit Partikelgrößen von 0,01 µm bis 100 µm. Das Pulver 1 wird in einem Behälter 2 bevorratet. Das im Behälter 2 befindliche Pulver bildet eine Oberfläche 3 aus, von der mittels eines Ansaugmittels 6 das Pulver 1 aus dem Behälter 2 entnommen wird. Das Ansaugmittel kann mittels eines Mehr-Achssystems 41 in einer X-Richtung X, einer Y-Richtung Y und einer Z-Richtung Z bewegt werden, um das Pulver von der gesamten Oberfläche 3 schichtweise abzusaugen. Zwischen einem ersten Arbeitsraum 51 und einem zweiten Arbeitsraum 52 ist eine Druckdifferenz Δp ausgebildet. Mittels der Druckdifferenz Δp ist es möglich das Pulver 1 aus dem Behälter 2 zu der Oberfläche 35 des Substrats 36 zu transportieren, welches sich im zweiten Arbeitsraum 52 befindet.

Eine Möglichkeit zur Einstellung der Druckdifferenz Δp zwischen der Oberfläche 3 des Pulvers 1 und der Oberfläche 3 des Substrats 35 bzw. zwischen dem ersten Arbeitsraums 51 und dem zweiten Arbeitsraum 52 ist durch eine Membranpumpe 12 gegeben. In diesem Fall wird die Membranpumpe 12 an einer Saugseite 13 mit dem Ansaugmittel 6 verbunden. An der Druckseite 15 der Membranpumpe 12 ist eine Druckleitung 16 angeschlossen, die mit einem Strahlgenerator 31 zur Erzeugung eines gebündelten Plasmastrahls 32 durch Lichtbogenentladung verbunden ist. Dem Plasmastrahl 32 des Strahlgenerators 31 wird das Pulver 1 im Bereich von dessen Auslass 34 in den Einspeisebereich mit Hilfe einer Düse 33 eingebracht. Das fein verteilte Pulver 1 wird mit dem Plasmastrahl 32 auf die Oberfläche 35 des Substrats 36 als Beschichtung 37 abgeschieden. Der Strahlgenerator 31 weist zur Erzeugung des Plasmastrahls 32 eine innere, stabförmige Elektrode 38 und eine diese umgebende, gegen die innere stabförmige Elektrode 38 isolierte Mantelelektrode 39 auf, die von der der Düse 33 gegenüberliegenden Öffnung von einem Arbeitsgas 40 durchströmt wird.

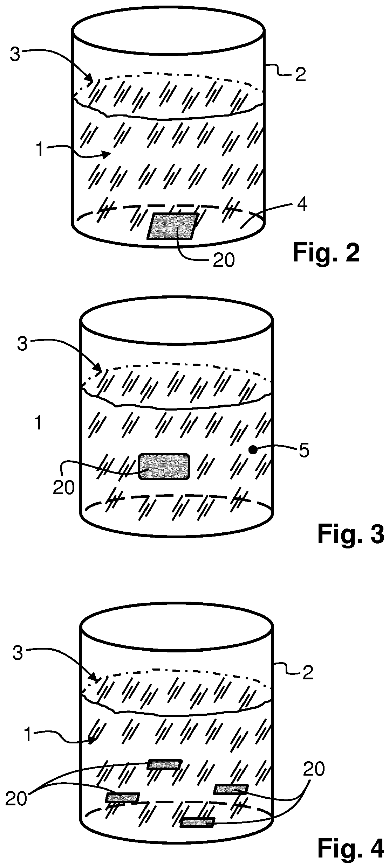

**Figur 2** zeigt eine schematische Ausführungsform des Behälters 2 für das Pulver 1, welcher bei der gegenwärtigen Erfindung Anwendung findet. Im oder am Boden 4 ist im Inneren des Behälters 2 ein RFID-Chip 20 vorgesehen. Das Pulver 1 wird in den Behälter 2 gefüllt und bedeckt den am Boden 4 des Behälters 2 angebrachten RFID-Chip 20. Der RFID-Chip 20 kann dabei direkt auf dem Boden 4 geklebt oder gelegt sein. Ebenso ist es möglich, dass der RFID-Chip 20 bevor das Pulver 1 eingefüllt wird noch mit einer Abdeckung (Schutzabdeckung; nicht dargestellt) versehen wird.

**Figur 3** zeigt eine andere Ausführungsform des Behälters 2. Hier ist der RFID-Chip 20 an einer Wand 5 des Behälters 2 angebracht. Ebenso, wie in der Beschreibung zu Fig. 2 bereits erwähnt, kann der RFID-Chip 20 noch mit einer Schutzabdeckung versehen werden.

**Figur 4** zeigt eine weitere Ausführungsform des Behälters 2. Hier sind bereits mehrere RFID-Chips 20 mit dem Pulver 1 vermischt, bevor dieses in den Behälter 2 eingefüllt wird. Die Vielzahl der RFID-Chips 20 ist dabei im Wesentlichen gleich innerhalb des Pulvers 1 verteilt angeordnet. Die RFID-Chips 20 schwimmen somit frei in dem im Behälter 2 vorhandenen Pulver 1.

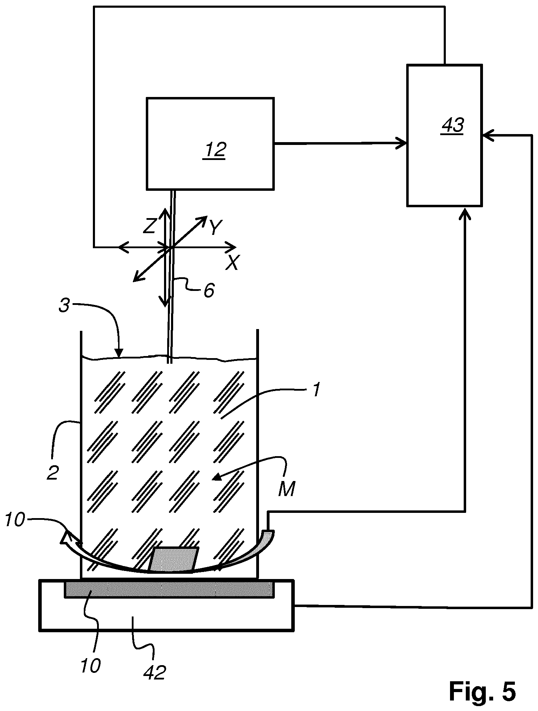

**Figur 5** zeigt eine schematische Anordnung des Behälters 2 mit dem Pulver 1 innerhalb einer Vorrichtung 200 zur Beschichtung eines Substrats 36. Die Vorrichtung 200 zum Beschichten eines Substrats 36 besitzt eine Waage 42, auf der der Behälter 2 steht. Wie bereits in der Beschreibung zu den Fig. 2 bis 4 erwähnt, ist im Behälter 2 mindestens ein RFID-Chip 20 vorgesehen. Dem Behälter 2, welcher auf der Waage 42 steht, ist eine Antenne 10 zugeordnet. Die Antenne 10 kann dabei in der Waage 42 integriert sein. Eine weitere Möglichkeit ist, dass die Antenne 10 den Behälter 2 umgibt, während dieser auf der Waage 42 steht. Beide möglichen Ausführungen sind in Fig. 5 dargestellt. Durch ständiges Wiegen der Masse M des Pulvers 1 im Behälter 2 während des Ansaugens des Pulvers 1 kann somit die momentane Masse M des Pulvers 1 im Behälter 2 bestimmt werden. Die gewonnenen Daten werden an eine Elektronik 43 übergeben. Zwischen der Waage 42 und der Elektronik 43 ist ein Operationsverstärker 26 vorgesehen, um mit der Waage 42 genaue Messdaten hinsichtlich der Masse M des Pulvers 1 im Behälter 2 zu erzielen. Für den Fall, dass der Beschichtungsvorgang mit dem Pulver 1 eines bestimmten Typs beendet wird, kann somit für das erneute Verwenden dieses angebrochenen Gebindes des Pulvers 1 die Einstellung der Vorrichtung 200 zum Beschichten mittels der in der Elektronik 43 gespeicherten und auf dem RFID-Chip 20 geschriebenen Daten für das erneute Verwenden dieses Pulvers 1 des bestimmten Typs die Einstellung der Vorrichtung 200 zum Beschichten vorgenommen werden. Somit ist es z. B. möglich, das Ansaugmittel 6 derart in Z-Richtung Z zu verfahren, dass das Ansaugmittel einen entsprechenden Abstand für eine entsprechende Eintauchtiefe in die Oberfläche 3 des Pulvers 1 erreicht. Somit ist es möglich, die Vorrichtung 200 automatisch anzufahren, so dass alle für die Beschichtung erforderlichen Parameter eingestellt sind. Ebenso kann mit den auf dem RFID-Chip gespeicherten Daten auch die Förderrate des Pulvers aus dem Behälter 2 wieder eingestellt werden. Der Set-up der Vorrichtung kann für die unterschiedlichen Typen des Pulvers 1 erheblich vereinfacht werden. Mittels der Antenne 10 werden die Daten auf dem RFID-Chip 20 ausgelesen und an die Elektronik 43 übergeben, die letztendlich die entsprechenden Einstellungen der Vorrichtung 200 für die Beschichtung eines Substrats 36 vornimmt.

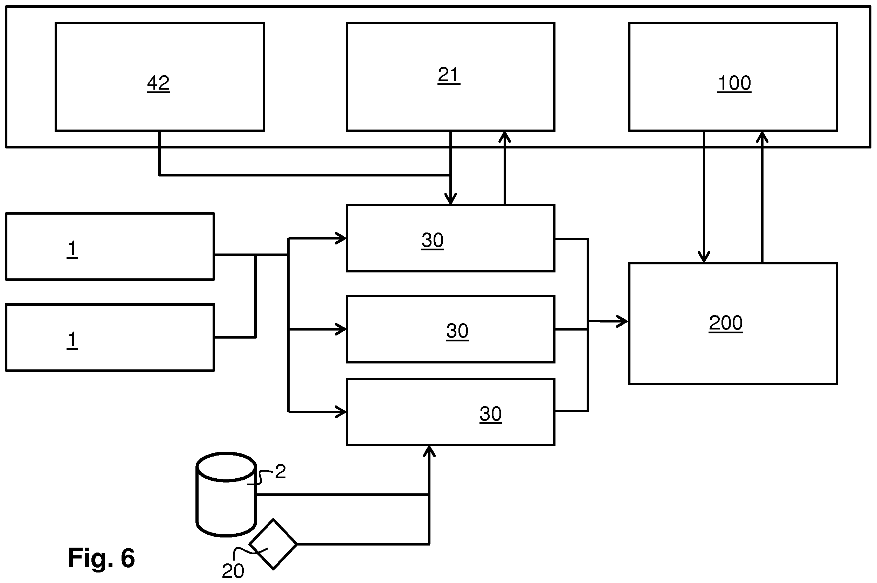

**Figur 6** zeigt eine schematische Darstellung des Verfahrens zum Kennzeichnen der Behälter 2 für das Pulver 1. Zunächst wird mindestens ein RFID-Chip 20 jedem Behälter 2, der für die Aufnahme des Pulvers 1 geeignet ist, zugeordnet. Das Pulver 1 wird von verschiedenen Herstellern in den unterschiedlichsten Pulvertypen zur Verfügung gestellt. Das Pulver 1 wird an Distributoren 30 übergeben, die letztendlich das Pulver 1 in die unterschiedlichen Behälter 2 füllen. Dabei ist darauf zu achten, dass der Behälter 2 entweder bereits mit dem RFID-Chip versehen ist, wobei der RFID-Chip immer im Inneren des Behälters 2 vorgesehen ist. Ebenso ist es möglich, mehrere RFID-Chips 20 mit dem Pulver 1 zu mischen und die Mischung aus Pulver 1 und RFID-Chip 20 in die Behälter 2 zu füllen. Die Distributoren 30 rufen einen Schlüssel 21 von einem Hersteller 100 für die Vorrichtung 200 Verwenden des Pulvers 1 oder einer Vorrichtung 200 zum Beschichten eines Substrats 36 ab.

Die Beschränkung in der nachfolgenden Beschreibung auf eine Vorrichtung 200 zum Beschichten eines Substrats 36 ist nicht als Beschränkung der Erfindung aufzufassen. Die Vorrichtung 200 zum Verwenden des Pulvers 1 kann eine Allgemeine Dosieranlage, eine Wägeanlage, eine Abfüllanlage, eine Mischanlage etc. sein. Für jeden Typ eines Pulvers 1 ist somit ein extra Schlüssel 21 zugeordnet. Mittels des Schlüssels 21 werden Daten des im Behälter 2 befindlichen RFID-Chips 20 mit einem individuellen Parametersatz über eine außerhalb des Behälters 2 befindliche Antenne 10 gelesen, beschrieben und aktualisiert. Der mittels des Schlüssels 21 vom Distributor 30 aktivierte RFID-Chip 20 gelangt im Behälter 2 zu der Vorrichtung 200 zum Beschichten eines Substrats 36. Die Vorrichtungen 200 zum Beschichten stehen in der Regel bei einem entsprechenden Anlagenbetreiber, der die verschiedensten Substrate 36 mit einer Beschichtung versieht. Die Waage 42 der Vorrichtung 200 zum Beschichten ist zusätzlich ein Qualitätssicherungssystem, so dass mit der Vorrichtung 200 zum Beschichten nur Pulver 1 verwendet werden kann, das mittels des vorgegebenen Schlüssels 21 freigeschaltet wurde. Hierzu ist wie bereits erwähnt, die Waage 42 mit der Antenne 10 versehen. Die Antenne 10 kann als Sender und/oder Empfänger ausgebildet sein.

Ebenso ist es möglich, mittels der Antenne 10 während des Entleerens des Pulvers 1 aus dem Behälter 2 einen individuellen Parametersatz auf den RFID-Chip 20 zu lesen, zu schreiben und zu aktualisieren. Der Parametersatz, welcher auf dem RFID-Chip 20 abgelegt ist, kann z. B. Einstellungswerte der Vorrichtung 200 zum Beschichten umfassen. Die Einstellungswerte können dabei auch für Folgearbeitsschritte der Vorrichtung 200 zum Beschichten verwendet werden. Der Parametersatz umfasst ferner einen Chargen- und Herstellernachweis des Pulvers 1. Dies ist erforderlich, falls es beim Beschichtungsprozess Probleme gibt, dass auf einfache Weise ein Nachweis geführt werden kann, dass bei der Vorrichtung 200 zum Beschichten das vom Hersteller 100 für diese Vorrichtung 200 zum Beschichten spezifizierte Pulver 1 verwendet worden ist. Ist dies nicht der Fall, hat der Betreiber einer Vorrichtung zum Beschichten ein nicht spezifiziertes Pulver 1 verwendet oder ein Distributor 30 hat ein nicht spezifiziertes Pulver 1 abgefüllt. Eine weitere Möglichkeit des Parametersatzes ist die Materialcharakterisierung des Pulvers 1. Unter Materialcharakterisierung ist z. B. die Größenverteilung der einzelnen Partikel des Pulvers 1, die Dichte, die Fließfähigkeit, die Leitfähigkeit und die chemische Zusammensetzung des Pulvers 1, etc. zu verstehen.

Ebenso ist es möglich, wie bereits in der Beschreibung zu Fig. 5 erwähnt, eine Restmenge des Pulvers 1 im Behälter 2 zu erfassen. Die Restmenge des Pulvers 1 ergibt sich durch den Entleervorgang in der Vorrichtung 200 zum Beschichten. Die im Behälter vorhandene Restmenge kann somit auf den RFID-Chip 20 geschrieben werden. Aus der Restmenge kann somit auf die Lage der Oberfläche 3 des Pulvers 1 im Behälter 2 geschlossen werden. Für die erneute Verwendung des Behälters 2 mit der Vorrichtung 200 zum Beschichten kann die Vorrichtung zum Beschichten 200 auf einfache Weise mit den auf dem RFID-Chip 20 vorhandenen Daten die Einstellung der Vorrichtung 200 durchgeführt werden. Die Einstellung der Vorrichtung 200 kann dabei vollkommen automatisch ablaufen, wobei das Ansaugmittel in Z-Richtung derart verfahren wird, dass es eine Position in einem definierten Abstand bzw. in einer definierten Eintauchtiefe in die Oberfläche 3 des Pulvers 1 einnimmt. Somit ist es möglich, dass ohne Einfluss eines Benutzers der Vorrichtung 200 zum Beschichten ein Wechsel zwischen den unterschiedlichen und zum Teil aufgebrachten Pulvermengen in den einzelnen Behältern möglich ist.

**Bezugszeichenliste**

| Nr. | Bezeichnung |
|---|---|
| 1 | Pulver |
| 2 | Behälter |
| 3 | Oberfläche des Pulvers |
| 4 | Boden |
| 5 | Wand |
| 6 | Ansaugmittel |
| 10 | Antenne |
| 12 | Membranpumpe |
| 13 | Saugseite |
| 15 | Druckseite |
| 16 | Druckleitung |
| 17 | Plasmabeschichtungsvorrichtung |
| 20 | RFID-Chip |
| 21 | Schlüssel |
| 23 | Anordnung |
| 26 | Operationsverstärker |
| 27 | Segment |
| 28 | Seil |
| 30 | Distributor |
| 31 | Strahlgenerator |
| 32 | Plasmastrahl |
| 33 | Düse |
| 34 | Auslass |
| 35 | Oberfläche |
| 36 | Substrat |
| 37 | Beschichtung |
| 38 | stabförmige Elektrode |
| 40 | Arbeitsgas |
| 41 | Mehr-Achssystem |
| 42 | Waage |
| 43 | Elektronik |
| 51 | erster Arbeitsraum |
| 52 | zweiter Arbeitsraum |
| 100 | Hersteller |
| 200 | Vorrichtung zum Verwenden |
| M | Masse des Pulvers |
| Δp | Druckdifferenz |
| X | x-Richtung |
| Y | y-Richtung |
| Z | z-Richtung |

## Patentansprüche

1. Verfahren zum Kennzeichnen von Behältern (2) für Pulver (1) zur Beschichtung eines Substrates (36) mit einem Plasmastrahl (32), **gekennzeichnet durch** die folgenden Schritte,
- dass mindestens ein RFID-Chip (20) jedem Behälter (2) für Pulver (1) zugeordnet wird;
- dass Pulver (1) in die Behälter (2) gefüllt wird;
- dass ein Schlüssel (21) für den mindestens einen RFID-Chip (20) von einem Hersteller (100) für eine Vorrichtung (200) zum Verwenden des Pulvers (1) abgerufen wird;
- dass Daten des im Behälter (2) befindlichen mindestens einen RFID-Chips (20) mittels des Schlüssels (21) mit einem individuellen Parametersatz über eine außerhalb des Behälters (2) befindliche Antenne (10) gelesen, beschrieben und aktualisiert werden; und
- dass während des Entleerens des Pulvers (1) aus dem Behälter (2) der individuelle Parametersatz gelesen, beschrieben und aktualisiert wird, wobei der Parametersatz eine Position eines Ansaugmittels (6) in Bezug auf eine Oberfläche (3) des Pulvers (1) in dem Behälter (2) umfasst, so dass bei einer erneuten Inbetriebnahme der Vorrichtung (200) zum Verwenden des Pulvers (1) mit einem teilentleertem Behälter (2) das Ansaugmittel (6) mittels eines Verstellelements (41) in einem definierten Abstand zur Oberfläche (3) des Pulvers (1) bzw. in einer definierten Eintauchtiefe in die Oberfläche (3) des Pulvers (1) verfahren kann.

2. Verfahren nach den Anspruch 1, wobei der Parametersatz Einstellungswerte der Vorrichtung (200) zum Verwenden des Pulvers (1) und Einstellungswerte für Folgearbeitsschritte der Vorrichtung (200) zum Verwenden des Pulvers (1) umfasst.

3. Verfahren nach einem der Ansprüche 1 bis 2, wobei der Parametersatz einen Chargen- und Herstellernachweis des Pulvers (1) und eine Füllmenge des Pulvers (1) im Behälter (2) umfasst.

4. Verfahren nach einem der Ansprüche 1 bis 2, wobei der Parametersatz eine Materialcharakterisierung des Pulvers (1) im Behälter (2) umfasst.

5. Verfahren nach einem der Ansprüche 1 bis 2, wobei der Parametersatz eine Restmenge des Pulvers (1) im Behälter (2) ist, die während des Entleervorgangs in der Vorrichtung (200) zum Verwenden des Pulvers (1) erfasst und auf den RFID-Chip (20) geschrieben wird.

6. Vorrichtung (200) zum Verwenden von Pulver (1) zur Beschichtung eines Substrates (36) mit einem Plasmastrahl (32), mit einem Behälter (2) für das Pulver (1), einem Ansaugmittel (6) zum Ansaugen des Pulvers (1) von einer Oberfläche des Pulvers (1) aus dem Behälter (2) und zum Transport des Pulvers (1) zu dessen Verwendung, **dadurch gekennzeichnet, dass** im Behälter (2) mindestens ein RFID-Chip (20) vorgesehen ist und dass außerhalb des Behälters (2) mindestens eine Antenne (10) vorgesehen ist, über die ein individueller Parametersatz des Pulvers (1) des mindestens einen RFID-Chips (20) lesbar und/oder schreibbar ist, wobei das Pulver (1) mittels eines vorgegebenen Schlüssels (21) freigeschaltet ist, wobei ein Verstellelement (41) vorgesehen ist, das das Ansaugmittel (6) aufgrund der auf dem RFID-Chip (20) vorhandenen Daten derart in Bezug auf die Oberfläche (3) des im Behälter (2) vorhandenen Pulvers (1) positioniert, dass eine für die Verwendung des Pulvers (1) erforderliche Menge an Pulver (1) pro Zeiteinheit automatisch einstellbar ist.

7. Vorrichtung (200) nach Anspruch 6, wobei der Behälter (2) auf einer Waage (42) steht und die Antenne (10) in der Waage (42) integriert ist.

8. Vorrichtung (200) nach einem der Ansprüche 6 oder 7, wobei ein RFID-Chip (20) an einem Boden (21) oder einer Wand (5) des Behälters (2) angebracht ist.

9. Vorrichtung (200) mit mindestens einem nach einem der Ansprüche 6 bis 8, wobei mehrere RFID-Chips (20) im Pulver (1) gleichverteilt angeordnet sind.

10. Vorrichtung (200) nach einem der Ansprüche 6 bis 9, wobei der RFID-Chip (20) mit einer Abdeckung versehen ist.

11. Vorrichtung (200) nach einem der Ansprüche 6 bis 10, wobei die Antenne (10) den Behälter (2) umschließt.

## Claims

1. A method for marking containers (2) for powder (1) for coating a substrate (36) using a plasma beam (32), **characterized by** the following steps:
- at least one RFID chip (20) is assigned to each container (2) for powder (1);
- powder (1) is poured into the container (2);
- a key (21) for the at least one RFID chip (20) is retrieved from a producer (100) for a device (200) for use of the powder (1);
- data of the at least one RFID chip (20) located in the container (2) are read, written, and updated by means of the key (21) using an individual parameter set via an antenna (10) located outside the container (2); and
- during the emptying of the powder (1) from the container (2), the individual parameter set is read, written, and updated, wherein the parameter set comprises a position of a suction means (6) in relation to a surface (3) of the powder (1) in the container (2), so that in the event of a renewed startup of the device (200) for use of the powder (1) with a partially-emptied container (2), the suction means (6) can be moved by means of an adjusting element (41) into a defined distance from the surface (3) of the powder (1) or into a defined immersion depth into the surface (3) of the powder (1).

2. The method according to Claim 1, wherein the parameter set comprises setting values of the device (200) for use of the powder (1) and setting values for subsequent work steps of the device (200) for use of the powder (1).

3. The method according to any one of Claims 1 to 2, wherein the parameter set comprises a batch and producer certificate of the powder (1) and a filling quantity of the powder (1) in the container (2).

4. The method as claimed in any one of Claims 1 to 2, wherein the parameter set comprises a material characterization of the powder (1) in the container (2).

5. The method according to any one of Claims 1 to 2, wherein the parameter set is a residual quantity of the powder (1) in the container (2), which is detected during the emptying procedure in the device (200) for use of the powder (1) and is written on the RFID chip (20).

6. A device (200) for use of powder (1) for coating a substrate (36) using a plasma beam (32), having a container (2) for the powder (1), a suction means (6) for suctioning the powder (1) from a surface of the powder (1) out of the container (2) and for transporting the powder (1) for the use thereof, **characterized in that** at least one RFID chip (20) is provided in the container (2), and at least one antenna (10) is provided outside the container (2), via which an individual parameter set of the powder (1) of the at least one RFID chip (20) can be read and/or written, wherein the powder (1) is released by means of a predefined key (21), wherein an adjusting element (41) is provided, which positions the suction means (6), on the basis of the data provided on the RFID chip (20), in relation to the surface (3) of the powder (1) provided in the container (2) such that a quantity of powder (1) per unit of time required for the use of the powder (1) is automatically settable.

7. The device (200) according to Claim 6, wherein the container (2) stands on a set of scales (42) and the antenna (10) is integrated into the set of scales (42).

8. The device (200) according to any one of Claims 6 or 7, wherein an RFID chip (20) is attached to a bottom (21) or a wall (5) of the container (2).

9. The device (200) according to at least one of Claims 6 to 8, wherein multiple RFID chips (20) are arranged uniformly distributed in the powder (1).

10. The device (200) according to any one of Claims 6 to 9, wherein the RFID chip (20) is provided with a cover.

11. The device (200) according to any one of Claims 6 to 10, wherein the antenna (10) encloses the container (2).

## Revendications

1. Procédé pour identifier des récipients (2) à poudre (1) pour le revêtement d'un substrat (36) avec un faisceau de plasma (32), **caractérisé en ce qu'**il comprend les étapes suivantes :
- au moins une puce RFID (20) est associée à chaque récipient (2) à poudre (1) ;
- les récipients (2) sont remplis de poudre (1) ;
- un code (21) pour l'au moins une puce RFID (20) est appelé par un fabricant (100) pour un dispositif (200) destiné à l'utilisation de la poudre (1) ;
- des données de l'au moins une puce RFID (20) qui se trouve dans le récipient (2) sont lues, écrites et actualisées au moyen du code (21) avec un ensemble de paramètres individuel par l'intermédiaire d'une antenne (10) située à l'extérieur du récipient (2) ; et
- pendant que le récipient (2) se vide de la poudre (1), l'ensemble de paramètres individuel est lu, écrit et actualisé, l'ensemble de paramètres comprenant une position d'un moyen d'aspiration (6) par rapport à une surface (3) de la poudre (1) dans le récipient (2), de sorte que lors de la mise en service suivante du dispositif (200) destiné à utiliser la poudre (1) avec un récipient (2) partiellement vidé, le moyen d'aspiration (6) peut se déplacer au moyen d'un élément de déplacement (41) à une distance définie de la surface (3) de la poudre (1) ou à une profondeur de pénétration définie dans la surface (3) de la poudre (1).

2. Procédé selon la revendication 1, dans lequel l'ensemble de paramètres comprend des valeurs de réglage du dispositif (200) destiné à utiliser la poudre (1) et des valeurs de réglage pour les étapes de travail suivantes du dispositif (200) destiné à utiliser la poudre (1).

3. Procédé selon l'une des revendications 1 à 2, dans lequel l'ensemble de paramètres comprend une vérification du lot et du fabricant de la poudre (1) et une quantité de remplissage de la poudre (1) dans le récipient (2).

4. Procédé selon l'une des revendications 1 à 2, dans lequel l'ensemble de paramètres comprend une caractérisation de matériau de la poudre (1) dans le récipient (2).

5. Procédé selon l'une des revendications 1 à 2, dans lequel l'ensemble de paramètres est une quantité restante de poudre (1) dans le récipient (2), qui est détectée pendant l'opération de vidage dans le dispositif (200) destiné à utiliser la poudre (1) et écrite sur la puce RFID (20).

6. Dispositif (200) destiné à utiliser une poudre (1) pour le revêtement d'un substrat (36) avec un faisceau de plasma (32), avec un récipient (2) pour la poudre (1), un moyen d'aspiration (6) pour aspirer la poudre (1) à partir d'une surface de la poudre (1) hors du récipient (2) et pour transporter la poudre (1) vers son utilisation, **caractérisé en ce qu'**il est prévu dans le récipient (2) au moins une puce RFID (20) et **en ce qu'**il est prévu à l'extérieur du récipient (2) au moins une antenne (10) par l'intermédiaire de laquelle un ensemble individuel de paramètres de la poudre (1) de l'au moins une puce RFID (20) peut être lu et/ou écrit, la poudre (1) étant débloquée au moyen d'un code (21) prédéterminé, un élément de déplacement (41) étant prévu pour positionner le moyen d'aspiration (6) par rapport à la surface (3) de la poudre (1) présente dans le récipient (2) en fonction des données présentes sur la puce RFID (20) de telle manière qu'une quantité de poudre (1) par unité de temps nécessaire à l'utilisation de la poudre (1) puisse être réglée automatiquement.

7. Dispositif (200) selon la revendication 6, dans lequel le récipient (2) est posé sur une balance (42) et l'antenne (10) est intégrée dans la balance (42).

8. Dispositif (200) selon l'une des revendications 6 ou 7, dans lequel une puce RFID (20) est placée sur un fond (21) ou une paroi (5) du récipient (2).

9. Dispositif (200) selon l'une des revendications 6 à 8, dans lequel plusieurs puces RFID (20) sont disposées dans la poudre (1) et réparties régulièrement.

10. Dispositif (200) selon l'une des revendications 6 à 9, dans lequel la puce RFID (20) est munie d'une couverture.

11. Dispositif (200) selon l'une des revendications 6 à 10, dans lequel l'antenne (10) entoure le récipient (2).
